# EUROPEAN PATENT APPLICATION

(11) **EP 4 411 753 A1**
(43) Date of publication of application: **07.08.2024**
(21) Application number: 21959591.5
(22) Date of filing: 08.12.2021
(51) Int. Cl.: G21C 17/017, G01B 11/16, G01B 11/245

(54) **METHOD OF MEASURING BENDING OF AN ELONGATE VERTICALLY ORIENTED CHANNEL**

(30) Priority: 29.09.2021 RU 2021128445
(71) Applicant: Joint Stock Company "Rosenergoatom", Moscow 109507 (RU); Joint Stock Company "N.A. Dollezhal Research and Development Institute of Power Engineering, Moscow 107140 (RU); Science and Innovations - Nuclear Industry Scientific Development, Private Enterprise, Moscow, 119017 (RU); Obschestvo s Ogranichennoy Otvetstvennost'Yu "Prolog", Kaluzhskaya oblast', g. Obninsk, 249033 (RU)
(72) Inventor: FEDOROV, Artyom Nikolaevich, Kaluzhskaya oblast', g. Obninsk, 249034 (RU); PODOSINNIKOV, Alexandr Alexandrovich, Moscow (p. Moskovskiy), 108811 (RU); STEPANOV, Maksim Alekseevich, Kaluzhskaya oblast', g. Obninsk, 249034 (RU)
(74) Representative: Osmans, Voldemars
(86) International application number: PCT/RU2021/000552
(87) International publication number: WO 2023/055253

(57) **Abstract**

The invention relates to measuring technology and can be used to implement a method for measuring bending of extended vertically directed channels. A fibre-optic sensor fixed at the end of a flexible hollow carrier rod is placed inside the extended vertically directed channel. A light signal is supplied via fibre-optic lines connected to the sensor, and reflected light signals are recorded. The fibre-optic sensor is equipped with a gravity pendulum. The flexible hollow carrier rod with the fibre-optic sensor is placed along the channel and using a photoreceiver and a computer to register the shift of an interference pattern of a reflected light signal in a gas gap between the upper end face of the gravity pendulum and the lower end face of fibre-optic lines connected to the photoreceiver and fastened to the sensor, said gas gap varying during the passage of the fibre-optic sensor as a result of the angular motion of the gravity pendulum away from the axis of the bowed channel. On the basis of the registered shifts, profilograms of the variations of the gas gap for each fibre-optic line are recorded; and on the basis of the obtained gas gap profilograms, the magnitude and direction of bending of the channel from the vertical axis are calculated to simplify measurements of bending of a vertically directed channel while maintaining measurement accuracy.

## Description

### TECHNICAL FIELD OF THE INVENTION

The present invention relates to measuring technology and can be used to implement a method for measuring bending of extended vertically directed channels.

### PRIOR ART

The closest technical solution to the claimed method is the method of measuring bending of a nuclear reactor fuel channel, including placing a carrying element with at least one fibre-optic sensor inside the central tube of a fuel assembly, supplying a light signal via fibre-optic lines of the sensor, and recording bending of the central tube of the fuel assembly in the form of profilograms by analyzing the reflected light signals. (patent RU 2626301, publication date 25.07.2017, IPC G01B 5/20).

The known method uses fibre-optic strain sensors, which are Bragg gratings embedded at several levels in the structure of radiation-resistant quartz optical fibre. To create a light signal, laser radiation with a wavelength from 800 nm to 1600 nm (800·10⁻⁹ m to 1600·10⁻⁹ m) is used, and a flexible hollow rod with fibre-optic strain sensors placed inside is used as a carrying element. When the nuclear reactor fuel channel deflects, the central tube of the fuel assembly deflects and, consequently, the flexible rod with fibre-optic sensors located inside the central tube deflects, wherein the fibre-optic strain sensors are affected by tensile or compressive forces. When a light signal initiated by a narrowband tunable laser passes via the fibre-optic lines of the strain sensors, the wavelength reflected by the Bragg grating changes. This change is detected by the photoreceiver and analyzed using software installed on the computer.

Reactor fuel channel is a complex and labor-intensive technology of manufacturing a fibre-optic strain sensor, associated with technically complex implementation of microscopic points with a changed refractive index in radiation-resistant quartz optical fiber, forming a Bragg grating.

### SUMMARY OF THE INVENTION

The problem to be solved by the present invention is the creation of a method of measuring bending of vertically directed and process long-length channels, which makes it possible to exclude the use of radiation-resistant quartz optical fiber with microscopic points with a changed refractive index, forming a Bragg grating, the manufacture of which includes a complex and labor-intensive technological operation of obtaining these microscopic points while maintaining the possibility of obtaining reliable information about changes in the geometric parameters of the process channel during its operation.

The technical result of the present invention is to simplify measurements of bending of a vertically directed channel while maintaining measurement accuracy.

The specified technical result in the claimed method of measuring bending of an extended vertically directed channel, including placing at least one fibre-optic sensor fixed at the end of a flexible hollow carrier rod inside the channel, supplying a light signal via fibre-optic lines connected to the sensor, recording reflected light signals using a photoreceiver connected to the fibre-optic lines, and determining bending of the channel on the basis of analyzing the parameters of the light signal using a computer connected to the photoreceiver, is achieved by equipping a fibre-optic sensor with a gravity pendulum that is suspended for angular motion at the lower end of the fibre-optic sensor; passing a flexible hollow carrier rod with the fibre-optic sensor along the channel and using a photoreceiver and a computer to register the shift of an interference pattern of a reflected light signal in a gas gap between the upper end face of the gravity pendulum and the lower end face of fibre-optic lines connected to the photoreceiver and fastened to the sensor, said gas gap varying during the passage of the fibre-optic sensor as a result of the angular motion of the gravity pendulum away from the axis of the bowed channel; recording, on the basis of the registered shifts of the interference pattern of the reflected light signal, profilograms of the variations of the gas gap for each fibre-optic line; and calculating, on the basis of the obtained gas gap profilograms, the magnitude and direction of bending of the channel from the vertical axis.

### LIST OF FIGURES, DRAWINGS, AND OTHER MATERIALS

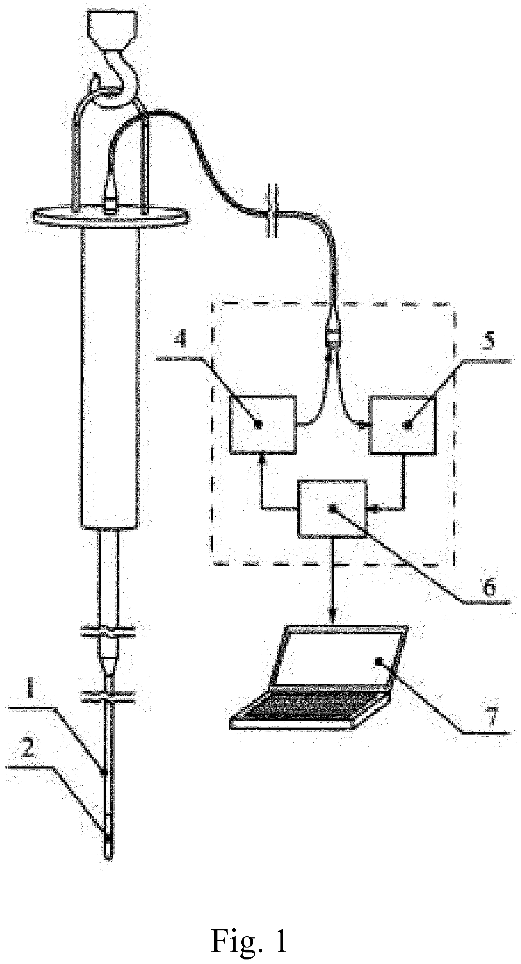

The essence of the present invention illustrated by drawings, wherein
FIG. 1 shows a general schematic of a device for carrying out a method of measuring bending of an extended vertically directed channel,

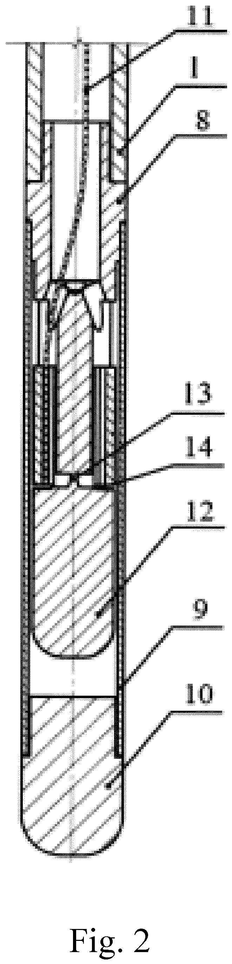

FIG. 2 shows a general view of a fibre-optic sensor for making measurements,

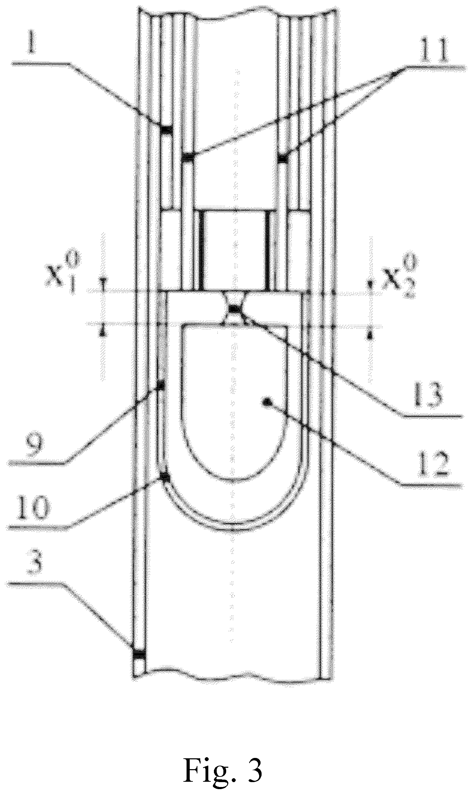

FIG. 3 shows a schematic arrangement of a fibre-optic sensor inside the straight vertically directed channel for implementing a method of measuring bending of the channel,

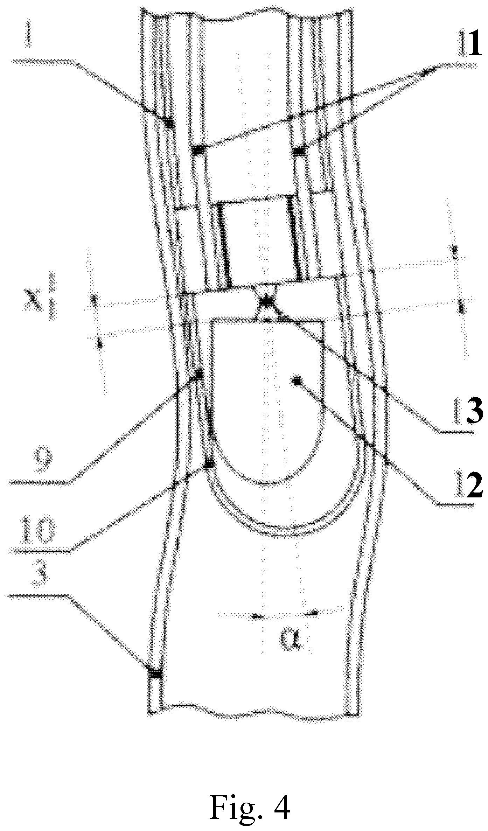

FIG. 4 shows a schematic arrangement of a fibre-optic sensor inside the vertically directed channel with bending.

### DETAILS CONFIRMING THE FEASIBILITY OF EMBODIMENT OF THE INVENTION

The method of measuring bending of a extended vertically directed channel is carried out as follows.

A flexible hollow carrier rod is placed inside the extended vertically directed channel, at the end of which at least one fibre-optic sensor is fixed. The light signal is supplied via fibre-optic lines connected to the sensor, and the reflected light signal is recorded using a photoreceiver connected to the fibre-optic lines. Based on the analysis of light signal parameters, bending of the channel is determined using a computer connected to the photoreceiver. The fibre-optic sensor is equipped with a gravity pendulum that is suspended for angular motion at the lower end of the fibre-optic sensor; the flexible hollow carrier rod with the fibre-optic sensor is passed along the channel and using a photoreceiver and a computer the shift of an interference pattern of a reflected light signal in a gas gap between the upper end face of the gravity pendulum and the lower end face of fibre-optic lines connected to the photoreceiver and fastened to the sensor is registered, said gas gap varying during the passage of the fibre-optic sensor as a result of the angular motion of the gravity pendulum away from the axis of the bowed extended vertically directed channel. On the basis of the registered shifts of the interference pattern of the reflected light signal, profilograms of the variations of the gas gap for each fibre-optic line are recorded; and on the basis of the obtained gas gap profilograms, the magnitude and direction of bending of the extended vertically directed channel from the vertical axis are calculated.

The present invention is explained by an example of a particular embodiment described below. The example presented is not the only possible one, but clearly demonstrates the possibility of achieving the claimed technical result with the given totality of essential features of the invention.

### Example.

A flexible hollow carrier rod 1 with at least one fibre-optic sensor 2 fixed at its end is installed inside an extended vertically directed channel 3. Then the fibre-optic sensor 2 is connected to a tunable laser 4 and a photoreceiver 5, which, in turn, are connected through a primary information processing unit 6 to a computer 7. The housing of the fibre optic sensor 2 is rigidly connected by means of a sleeve 8 to the flexible hollow carrier rod 1. A tube 9 and a cover 10 of the fibre-optic sensor housing 2 provide a sealed cavity of the fibre-optic sensor 2, which is filled with inert gas. After installing the flexible hollow carrier rod 1 in its original position (the flexible hollow carrier rod 1 is completely lowered into the extended vertically directed channel 3) the lifting of the flexible hollow carrier rod 1 begins. Bending is measured by passing the flexible hollow carrier rod 1 in extended vertically directed channel 3, wherein a light signal from the tunable laser 4 is supplied to the fibre-optic sensor 2 via fiber-optic lines 11, and the signal reflected by the fibre-optic sensor 2 is received by the photoreceiver 5.

In the presence of bending of the extended vertically directed channel 3 along which the flexible hollow carrier rod 1 passes, the gravity pendulum 12 of the fibre-optic sensor 2 due to the flexible element 13 is deflected by an angle proportional to the angle of deviation of the fibre-optic sensor 2 from the gravity vector.

When the flexible hollow carrier rod 1 is lifted, the fibre-optic sensor 2 is deflected relative to the gravity field and, as a result, the gravity pendulum 12 is deflected relative to the central axis of the fibre-optic sensor 2. As a result, the geometric parameters of a gas gap 14 change, namely, the distances between the reflective surface of the gravity pendulum 12 and the ends of the fibre-optic lines 11 change, which causes a shift in the interference pattern, which is recorded by means of the photoreceiver 5 and analyzed using specialized software installed on the computer 7. As a result of measurements, profilograms of the gas gap 14 are recorded for each fibre-optic line 11. Based on the obtained profilograms of the gas gap 14, profilograms of the magnitude and direction of deflection of the extended vertically directed channel 3 from the vertical axis are calculated.

The proposed method can be used when measuring long-length vertical channels in various industries.

## Claims

1. A method of measuring bending of an extended vertically directed channel, including placing at least one fibre-optic sensor fixed at the end of a flexible hollow carrier rod inside the channel, supplying a light signal via fibre-optic lines connected to the sensor, recording reflected light signals using a photoreceiver connected to the fibre-optic lines, and determining bending of the channel on the basis of analyzing the parameters of the light signal using a computer connected to the photoreceiver, **characterized in** equipping a fibre-optic sensor with a gravity pendulum that is suspended for angular motion at the lower end of the fibre-optic sensor; passing a flexible hollow carrier rod with the fibre-optic sensor along the channel and using a photoreceiver and a computer to register the shift of an interference pattern of a reflected light signal in a gas gap between the upper end face of the gravity pendulum and the lower end face of fibre-optic lines connected to the photoreceiver and fastened to the sensor, said gas gap varying during the passage of the fibre-optic sensor as a result of the angular motion of the gravity pendulum away from the axis of the bowed extended vertically directed channel; recording, on the basis of the registered shifts of the interference pattern of the reflected light signal, profilograms of the variations of the gas gap for each fibre-optic line; and calculating, on the basis of the obtained gas gap profilograms, the magnitude and direction of bending of the extended vertically directed channel from the vertical axis.
